Europäisches Patentamt

European Patent Office

Office européen des brevets

(11) Publication number: 0 077 605
A2

(12) **EUROPEAN PATENT APPLICATION**

(21) Application number: 82304615.6

(22) Date of filing: 02.09.82

(51) Int. Cl.³: **A 63 D 15/00**

(30) Priority: 15.10.81 US 311872

(43) Date of publication of application:
27.04.83 Bulletin 83/17

(84) Designated Contracting States:
DE FR GB

(71) Applicant: BRUNSWICK CORPORATION
One Brunswick Plaza
Skokie Illinois 60077(US)

(72) Inventor: Warren, Ronald A.
1409 Stagecoach Drive
Olathe Kansas 66062(US)

(74) Representative: Allden, Thomas Stanley et al,
A.A. THORNTON & CO. Northumberland House 303-306
High Holborn
London WC1V 7LE(GB)

(54) Cue ball detection and separation assembly.

(57) An assembly for detecting and separating a cue ball having a metal insert therein includes a transformer coil disposed within a main passageway of a billiard table and through which all of the billiard balls roll. A start switch disposed upstream of the transformer is actuated by a ball rolling therepast to energize the transformer coil only when a ball is present. The cue ball affects the field of the transformer such that the amplitude of the output thereof drops. The output of the transformer is compared to a reference by a comparator. If the transformer output drops below the reference, the output of the comparator goes high, actuating a solenoid to divert the cue into an unlocked compartment. A counter is provided to count the number of object balls retained in a locked compartment. After all of the object balls have been counted, the counter provides an inhibit signal to prevent actuation of the solenoid so that the cue ball is captured in the locked compartment at the end of a game.

FIG. 1

EP 0 077 605 A2

# Description

## Cue Ball Detection and Separation Assembly

### Background of the Invention

This invention relates to an assembly for detecting and separating a cue ball having a metal insert therein during the progress of a billiard game and for capturing the cue ball at the end of the game to retain the cue ball in a locked compartment with the object balls until the assembly is reset.

Coin operated billiard tables typically include passageways leading from each of the pockets to a locked compartment for retaining the billiard balls as they are knocked into the pockets during the progress of a game. The compartment remains locked until a coin of proper denomination is deposited at which time the compartment opens to provide access to the billiard balls therein. A cue ball for use in such coin operated billiard tables must be separated from the object balls and prevented from entering the locked compartment in the event that the cue ball has been inadvertently scratched or knocked into one of the pockets during the progress of the game.

Known cue ball separating assemblies include providing a cue ball which is of a different size or weight than the object balls, detecting the difference mechanically and preventing the cue ball from entering the locked compartment. This has been found unacceptable since it is desirable that the cue ball have the same physical characteristics as the object balls.

Another known cue ball separating assembly includes providing a cue ball having an insert of magnetic material located within the ball as near as possible to the surface thereof so that the cue ball may be directed into an unlocked compartment by means of a magnet. These assemblies provide no means, however, to direct the cue ball into the locked compartment at the end of a game so that it is retained with the object balls until the start of a new game.

Still another known cue ball detecting and separating assembly includes an induction coil located about a central passageway of the billiard table and through which all of the billiard balls roll. Downstream of the induction coil, the central passageway branches off into a passageway leading to the locked compartment for object balls and a passageway leading to an unlocked compartment for the cue ball. When a cue ball having a metal insert therein rolls through the induction coil, the field produced by the coil is affected such that the output of the coil signals an electronic circuit which actuates a mechanical kicker or the like disposed in the central passageway near the point at which the passageway branches off. The kicker when actuated knocks or diverts the cue ball into the passageway leading to the unlocked compartment.

Known cue ball detection and separating assemblies utilizing induction coils have had numerous problems with accurately detecting the presence of a cue ball having a metal insert therein and accurately timing the actuation of the kicker to account for the situation where the cue ball rolls past the kicker immediately following and in close proximity to an object ball. Further, these separating systems typically consume large amounts of power and waste energy by continuously powering the induction coil throughout the progress of a game.

0077605

-3-

## Summary of the Invention

In accordance with the present invention, the disadvantages of prior cue ball detection and separating assemblies have been overcome.

The assembly of the present invention is a low power consumption assembly which accurately detects and separates a cue ball having a metal insert therein, the cue ball being of the same size and weight as the object balls.

The cue ball detection and separating assembly includes a start switch disposed within the main passageway of the billiard table through which all of the billiard balls roll. When actuated by a billiard ball rolling therepast, the start switch connects a battery to a voltage regulator which provides a stable voltage far below the battery voltage to power a detection circuit. The high current detection circuit is powered for a minimal amount of time and only when a billiard ball actuates the start switch so that the life of the battery is prolonged.

The detection circuit includes a transformer coil disposed downstream of the start switch in the main passageway and through which all of the billiard balls roll. Non-metallic object balls have no appreciable effect on the field of the transformer coil as they roll therethrough. However, a cue ball having a metal insert therein affects the field of the transformer coil as the cue ball rolls through such that the amplitude of the output signal of the transformer drops. The output signal of the transformer coil is averaged and compared to a reference signal by means of a comparator. The output of the comparator goes high, actuating a solenoid if the output signal of the transformer drops below the reference signal indicating the presence of a cue ball. The solenoid is located downstream of the transformer coil and when actuated, diverts the cue ball into a passageway leading to an unlocked compartment so that the cue ball may be retrieved if scratched during the progress of the game.

Time delays and pulse stretching means are connected between the output of the comparator and the solenoid to account for the time required for the cue ball to roll from the transformer coil to the solenoid so that the solenoid diverts only the cue ball and not an object ball in the event that the cue ball follows an object ball in close proximity.

The cue ball detection and separating assembly further includes a count switch disposed downstream of the solenoid in a passageway leading to a locked compartment for object balls. The count switch is actuated as each of the object balls rolls therepast and provides a pulse to a counter for counting the number of object balls knocked in during the progress of the game. When the counter reaches a predetermined number indicating all of the object balls have been knocked in, the counter provides an output signal which prevents the output of the comparator from going high and thus prevents actuation of the solenoid. Because the solenoid is prevented from actuating, when the cue ball is subsequently knocked in at the end of the game, the cue ball rolls into the locked compartment where it is retained with the object balls until the assembly is reset.

Further advantages of the invention will be readily apparent from the following specifications and from the drawings in which:

Fig. 1 is a plan view of a billiard table having the cue ball detection and separation assembly of the present invention;

Fig. 2 is a fragmentary view of the cue ball detection and separation assembly of Fig. 1;

Fig. 3 is a schematic diagram of the detection and separation circuit.

Specification

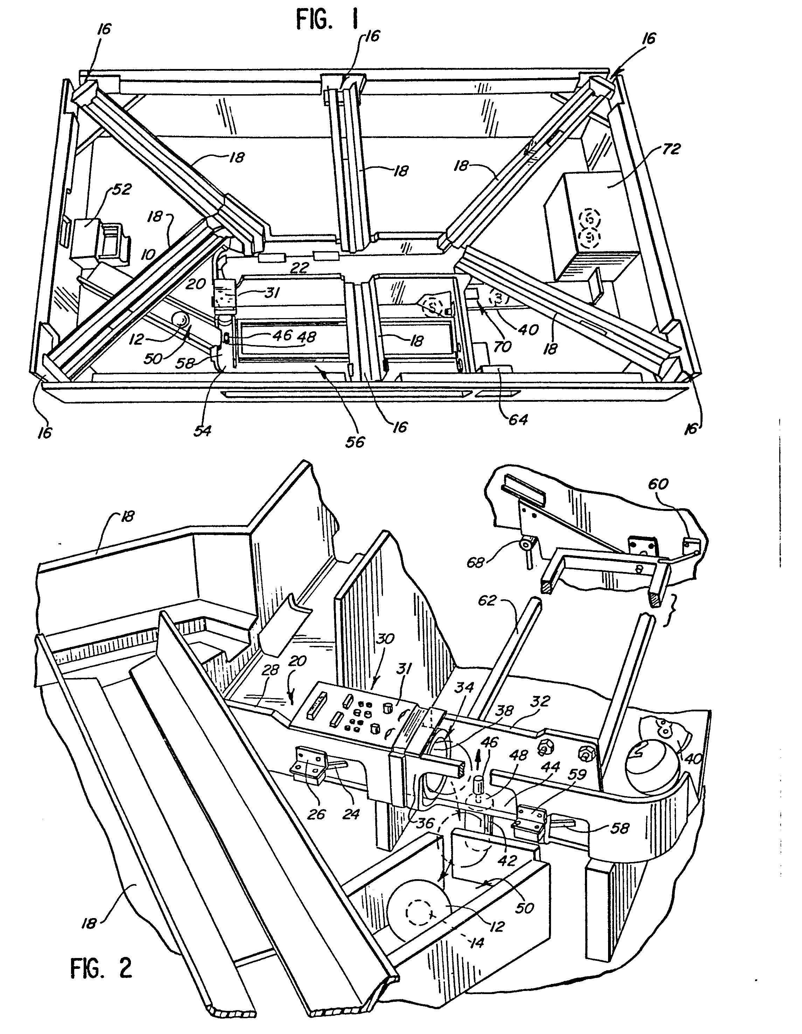

Figs. 1 and 2 illustrate the assembly, generally designated 10, for detecting and separating a cue ball 12 having a metal insert 14 therein, the cue ball being of the same size and weight as the object balls. The metal insert 14 disposed within the cue ball 12 may be a ring formed of Mu metal as disclosed in the copending U.S. application Serial No. 302,829 and assigned to the assignee of the present invention; however, cue balls having different metal inserts therein may be detected and separated by the assembly 10.

The cue ball detection and separating assembly 10 is disposed within a conventional billiard table having six pockets 16. Each of the pockets 16 communicates with an associated passageway 18 leading to a main passageway 20 through which all of the billiard balls roll. The passageways 18 and 20 are made of a hard material such as structural foam and are inclined so that a ball, when knocked into a pocket 16, will roll by gravity down the associated passageway 18 and through the main passageway 20 in the direction of the arrows 22.

A start switch 24 is mounted by means of a bracket 26 on a side wall 28 of the main passageway 20. The start switch 24 extends into the main passageway 20 at an angle of approximately 15°-20° from the side wall 28 such that a billiard ball rolling through the main passageway will contact the start switch 24, closing the switch for a short period of time. When actuated by a billiard ball rolling therepast, the start switch 24 connects a battery, now shown, to a detection and separation circuit 30 disposed on a board 31 which is mounted across the main passageway 20 resting on the upper edge of the side wall 28 and a side wall 32.

Disposed about the main passageway 20, downstream of the start switch 24 at a distance $d_1$ of 2 3/4", is a transformer coil 34 through which all of the billiard balls roll. The transformer coil 34 may be a step-up transformer having primary and secondary windings 36 wrapped about a core 38. When energized by a billiard ball actuating the start switch, the transformer remains powered for a period of time sufficient for the billiard ball to roll through the transformer coil 34.

A nonmetallic object ball 40, as it rolls through the transformer coil 34, has no appreciable effect on the electromagnetic field set up in the transformer when energized. However, the cue ball 12 having a metal insert therein affects the electromagnetic field of the transformer coil 34 as the cue ball rolls therethrough such that the amplitude of the output signal of the transformer drops. The output of the transformer coil 34 is connected to the circuit 30 which detects the drop in amplitude of the output signal indicating the presence of the cue ball 12 and energizes a solenoid 42 in response thereto.

The solenoid 42 is disposed beneath the floor 44 of the main passageway 20 at a distance $d_2$ of 2 1/4" from the transformer coil and located closer to the sidewall 32 than to the sidewall 28. The solenoid, when actuated by the detection circuit 30, drives a plunger 46 upward through a small hole 48 in the floor 44 of the main passageway 20. The plunger 46, when in its extended position, diverts the cue ball 12 as it rolls through the main passageway 20 such that the cue ball drops down into an inclined passageway 50 leading to an unlocked compartment 52 where a player has free access to the cue ball.

A nonmetallic object ball 40 will not be detected as it rolls through the transformer coil 34 so that the plunger 46 remains in its unextended position allowing the object ball to continue to roll from the main passageway 20 into a passageway 54 leading to a locked compartment 56. A count switch 58 is mounted by means of a bracket 59 on the sidewall 28 of the passageway 54 downstream of the solenoid 42. The count switch extends at an angle of approximately 15°-20° from the sidewall 28 such that a billiard ball rolling through the passageway 54 will contact the count switch 58, closing the switch for a short period of time to produce a pulse.

The count switch 58 is connected to a counter disposed on the circuit board 31. The counter counts the number of pulses from the count switch 58 to keep track of the number of object balls knocked into the pockets 16 and contained in the locked compartment 56. The counter, upon counting a predetermined number of pulses indicating that all of the object balls are contained in the locked compartment 56, provides an output signal which inhibits the detection circuit 30 from actuating the solenoid 42 so that when the cue ball is subsequently knocked into a pocket 16, the cue ball will roll through the main passageway 20 to the passageway 54 and into the locked compartment 56 where it is captured with the object balls at the end of the game.

A reset switch 60 is mounted on a dump bar 62 located in the locked compartment 56. The reset switch 60 is actuated by depositing a coin of proper denomination in a coin box 64 located on the side of the billiard table. When actuated, the reset switch 60 operates to raise the dump bar 62 by contacting a lever 66 such that the dump bar 62 rotates about a nylon roller 68. When the dump bar 62 is raised, the billiard balls maintained in the locked compartment 56 roll through a passageway 70 into an unlocked compartment 72 where access to the balls is had so that a new game may be played.

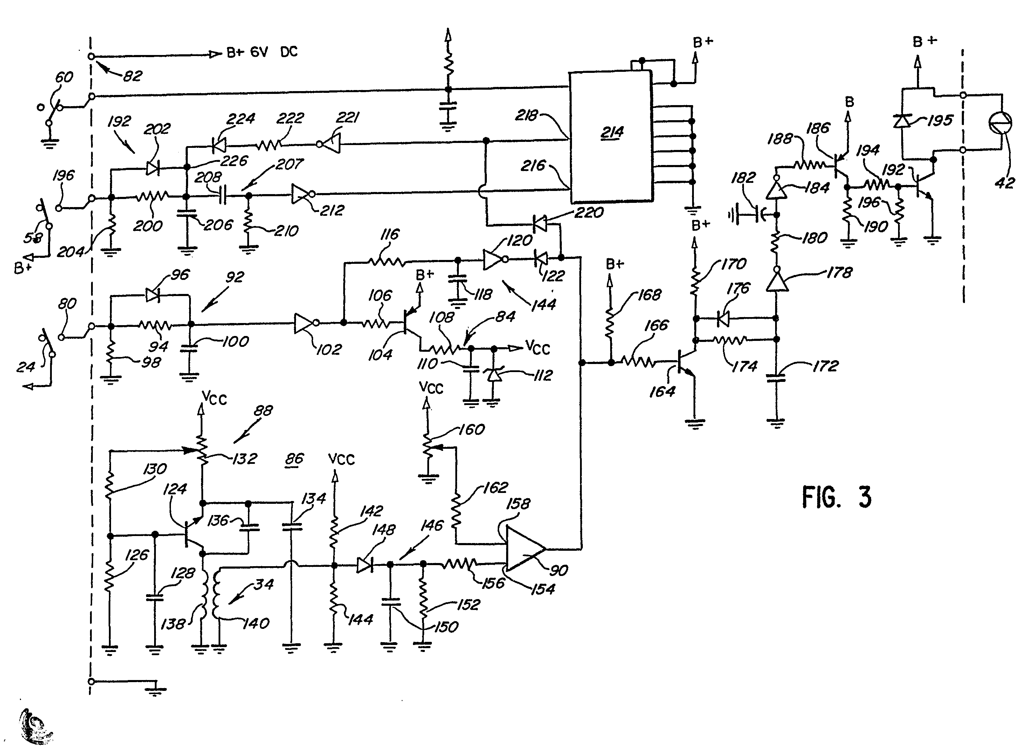

Operation of the cue ball detection and separation circuit 30 as shown in Fig. 3 is initiated as a billiard ball passes the start switch 24 so that the switch closes, contacting terminal 80 to connect a 6 volt battery 82 to a voltage regulator generally designated 84. The voltage regulator 84 supplies power to a high current detection portion of the circuit generally designated 86 and including an RF oscillator 88, the transformer coil 34 and a comparator 90. Because the high current detection circuit 86 is powered only when a billiard ball actuates the start switch 24, the life of the battery 82 is prolonged.

When the start switch 24 is actuated by a billiard ball, a high pulse is produced which is smoothed by a debounce circuit 92 comprised of a parallel combination of a 1.5 MΩ resistor 94 and a diode 96 connected between a 1KΩ resistor 98 and a 1μf capacitor 100, each of which are connected to ground. The debounce circuit 92 is connected to a Schmitt trigger inverter 102, the output of which goes low when the start pulse is applied thereto. The low output pulse from the inverter 102 is applied to the base of an PNP transistor 104 through a 4.7KΩ resistor 106, the transistor 104 having an emitter connected to the +6 volt battery 82 and a collected connected to the voltage regulator 84. When the low output pulse from the inverter 102 is applied to the base of the transistor 104, the transistor turns on and the voltage regulator 84, comprised of a 510Ω resistor 108 connected to ground through a parallel combination of a 10µf capacitor 110 and a zener diode 112, provides a regulated 2.5 volt output which is supplied to the detection circuit 86 to energize the transformer coil 34.

Because the transformer coil 34 is located downstream of the start switch 24, the start pulse is delayed by the debounce circuit 92 and the pulse stretched by the inverter 102 to insure that the transformer coil is energized at the time the billiard ball rolls therethrough. As shown, the transformer coil 34 is powered for approximately 2 seconds.

An inhibit circuit generally designated 114 is connected between the output of the inverter 102 and the output of the comparator 90 to prevent transient signals from driving the output of the comparator 90 high when the voltage regulator 84 is first connected to the battery 82. The inhibit circuit 114 includes a time delay 115 comprised of a 220K resistor 116 and a .1µ capacitor 118 so that the low output pulse from the inverter 102 is delayed for a short period of time to insure that the power supply is stabilized before the low pulse is applied to an inverter 120. During the delay period of the time delay 115 the input to the inverter 120 is high and the output thereof is low. The low output of the inverter 120, when applied to the cathode of a diode 122, maintains the output of the comparator 90 low until the power supply is stabilized, preventing actuation of the solenoid 42 by transient signals.

The RF oscillator 88 is controlled by a NPN transistor 124 having a base connected to ground through the parallel combination of a 47KΩ resistor 126 and a .1µf capacitor 128. The base of the transistor 124 is also connected to the 2.5 volt output of the voltage regulator 84 through a 39KΩ resistor 130 and a variable resistor 132. The emitter of the NPN transistor 124 is connected through the variable resistor 132 to the voltage regulator 84 and is also connected to ground through a .01µf capacitor 134. A 350 pf capacitor 136 is connected across the emitter and collector of the transistor 124, the collector of which is connected to ground through a primary winding 138 of the transformer coil 34.

The oscillator 88 provides an alternating current to the primary winding 138, the voltage across which is reflected on the secondary winding 140. The secondary winding 140 is connected between a 100K resistor 142 and a 100KΩ resistor 144, the resistor 142 being connected to the output of the voltage regulator 84 and the resistor 144 being connected to ground. The series connected resistors 142 and 144 establish a mid-point for the output of the secondary winding 140 and also stabilize the output signal. The A.C. output signal of the secondary winding 140 is applied to an averaging circuit 146 comprised of a diode 148 connected to ground through the parallel combination of a .1µf capacitor 150 and a 220KΩ resistor 152 to produce a D.C. signal applied to an inverting input terminal 154 of the comparator 90 through a 100K resistor 156. A noninverting input terminal 158 of the comparator 90 is connected to the output of the voltage regulator 84 through a variable resistor 160 and a 100KΩ

resistor 162, the values of which establish a reference voltage for the comparator 90.

The nonmetallic object balls 40, as they roll through the transformer coil 34, have no appreciable effect on the electromagnetic field of the transformer so that the D.C. voltage applied to the comparator 90 at the inverting input terminal 154 is greater than the reference voltage applied to the noninverting input terminal 158, the output of the comparator 90 being low. The cue ball 12 having the metal insert 14 therein affects the electromagnetic field of the transformer coil 34 as it rolls therethrough such that the amplitude of the output signal from the secondary winding 140 drops. When the voltage applied to the inverting input terminal 154 of the comparator 90 drops below the reference voltage applied to the noninverting input terminal 158, the output of the comparator 90 goes high indicating the presence of the cue ball 12.

The output of the comparator 90 is connected to the base of an NPN transistor 164 through a 39K resistor 166 which is connected to the 6 volt battery 82 through a 39K$\Omega$ resistor 168. The emitter of the transistor 164 is connected to ground and the collector of the transistor is connected to the battery 82 through a 2.2K$\Omega$ resistor 170 and is also connected to ground through a 1Mf capacitor 172 connected in series to the parallel combination of a 51K$\Omega$ resistor 174 and a diode 176.

The high output of the comparator 90, indicating the presence of the cue ball 12, turns the transistor 164 on, rapidly producing a low pulse applied to the input of a Schmitt trigger inverter 178, the output of which goes high. The output of the inverter 178 is connected, through a time delay

comprised of a 75KΩ resistor 180 and a .1µf capacitor 182, to a Schmitt trigger inverter 184, the output of which goes low when the high output from the inverter 178 is applied thereto. The low output from the inverter 184 is applied to the base of an PNP transistor 186 through a 22KΩ resistor 188, the low signal from the inverter 184 turning on the transistor 186 having an emitter connected to the 6 volt battery 82 and a collector connected to ground through a 470Ω resistor 190. The transistor 186 is a driving transistor having its collector connected to the base of a second driving transistor 192 through a 22Ω resistor 194 which is connected to ground through a 330Ω resistor 196. The transistor 192, when turned on by the transistor 186, drives the solenoid 42 connected between the collector of the transistor 192 and the 6 volt battery 82, a diode 195 being connected across the solenoid 42.

The transistor 164, its associated circuitry and the inverter 178 stretch the high output pulse from the comparator 90 when the cue ball 12 has been detected. The purpose of the pulse stretching is to insure that the plunger 46 of the solenoid 42 is in its extended position for a period of time sufficient for the cue ball 12 to roll from the transformer coil 34 to the solenoid where it is diverted into the passageway 50 leading to the unlocked compartment 52. The resistor 180 and the capacitor 182 provide a time delay for the stretched pulse from the output of the inverter 178 so that the cue ball has enough time to reach the solenoid before the solenoid is actuated. This time delay insures that the solenoid 42 will not be actuated too soon so as to prevent an object ball from being diverted to the unlocked compartment 52 in the event that the cue ball 12 immediately follows an object ball through the main passageway 20.

The count switch 58, as discussed above, is actuated by contact with a billiard ball rolling through the passageway 54 leading to the locked compartment 56. When actuated, the count switch 58 connects the 6 volt battery to a terminal 196 producing a high count pulse which is input to a debounce circuit 198 comprised of a parallel combination of a 220KΩ resistor 200 and a diode 202 connected between a 1K resistor 204 and a .1µf capacitor 206, each of which are connected to ground. The debounce circuit 198 stretches the high count pulse which is applied to a one shot 207 comprised of a .01µf capacitor 208 and a 39K resistor 210 connected to ground. The high count pulse produced by the one shot is applied to the input of a Schmitt trigger inverter 212, the output of which goes low. The low output pulse from the inverter 212 is applied to the input of a four bit binary counter 214 at pin 216.

The counter 214 counts the number of low pulses applied thereto and indicative of the number of object balls 40 which have been knocked into a pocket 16 and retained in the locked compartment 56. Upon counting a predetermined number of object balls 40, the predetermined number indicating that all of the object balls have been knocked in and being 15 for a typical billiard game, the counter produces a low output signal at pin 218. This low output signal is connected to the cathode of a diode 220, the anode of which is connected to the output of the comparator 90 and the base of the transistor 164 through the resistor 166. The low pulse applied to the cathode of the diode 220 maintains the output of the comparator 90 low regardless of whether the transformer output signal applied to terminal 154 of the comparator drops below the reference signal indicating the presence of the cue ball 12. Thus, when the cue ball 12 is subsequently knocked into a pocket 16 even though the transformer coil 34 detects tis presence, the solenoid is prevented from being actuated so that at the end of the game, the cue ball is allowed to roll through the passageway 54 to the locked compartment 56 where it is retained with the object balls 40.

The low signal from pin 218 is also applied to an inverter 221, the output of which goes high. The output of the inverter 221 is connected to the debounce circuit 198 and the one shot 207 through a resistor 222 and a diode 224. The high output from the inverter 221 indicating that all of the object balls have been captured, maintains a node 226 high so that when the cue ball 12 rolls through the passageway 54 actuating the count switch 58, the state of the one shot 207 does not change and the counter does not count the cue ball. At the start of a new game when the switch 60 is actuated, the counter 214 is reset to zero.

## Claims

1. A cue ball detection and separation assembly for detecting the presence of a cue ball having a metal insert therein and for separating said cue ball from a plurality of nonmetallic object balls, said assembly for use with a billiard table having a main path through which each of said balls roll, the main path branching into a first path leading to an object ball compartment and a second path leading to a cue ball compartment comprising:

detecting means disposed within the main path of the billiard table for providing an output signal, the amplitude of which changes in response to said cue ball rolling therethrough;

means for comparing the output signal of the detecting means to a reference signal;

means located downstream from the detecting means and actuable in response to the comparing means for directing said cue ball into said second path if the amplitude of the output signal is less than the amplitude of the reference signal.

2. The cue ball detection and separation assembly of claim 1 further including:

means for supplying power to the detecting means; and

start switch means disposed in the main path of the billiard table upstream of said detecting means and actuable in response to a ball rolling therepast for turning on said power supply for a period of time sufficient for a ball to roll through the detection means.

3. The cue ball detection and separation assembly of claim 2 further including means for preventing actuation of the directing means for a period of time sufficient for said power supply to stabilize after said switch means is actuated.

4. The cue ball detection and separation assembly of claim 1 further including:

count switch means disposed in the first path of said billiard table and actuable in response to a ball rolling therepast for providing an output pulse as each ball rolls past; and

means for counting said output pulses.

5. The cue ball detection and separation assembly of claim 4 wherein said counting means provides an inhibit signal upon counting a predetermined number of output pulses for preventing the actuation of said directing means.

6. The cue ball detection and separation assembly of claim 5 further including means for inhibiting the counting means after the predetermined number of output pulses have been counted.

7. The cue ball detection and separation assembly of claim 1 wherein the detecting means includes a transformer coil having a primary winding connected to a source of alternating current and a secondary winding for providing the output signal.

8. The cue ball detection and separation assembly of claim 7 further including means for averaging the output signal from the secondary winding to provide a D.C. input to the comparing means.

9. A cue ball detection and separation assembly for detecting the presence of a cue ball having a metal insert therein and for separating said cue ball from a plurality of nonmetallic object balls, said assembly for use with a billiard table having a main path through which each of said balls roll, the main path branching into a first path leading to an object ball compartment and a second path leading to a cue ball compartment comprising:

detecting means disposed within the main path of the billiard table for providing an output signal, the amplitude of which changes in response to said cue ball rolling therethrough;

means for comparing the output signal of the detecting means to a reference signal and for providing an output pulse if the amplitude of the output signal is less than the amplitude of the reference signal;

means actuable in response to the output pulse for directing said cue ball into said second path, said directing means being disposed a predetermined distance downstream from the detecting means.

10. The detector and separation assembly of claim 9 further including means for delaying the output pulse from said comparing means for a period of time sufficient for said cue ball to reach the directing means.

11. The detection and separation assembly of claim 10 further including means for stretching the output pulse to maintain actuation of the directing means for a predetermined period of time.

12. The detection and separation assembly of claim 9 further including:

means for counting the number of balls rolling through the first path of the billiard table and for inhibiting the comparing means from providing an output pulse upon counting a predetermined number of balls.

13. A cue ball detection and separation assembly for detecting the presence of a cue ball having a metal insert therein and for separating said cue ball from a plurality of nonmetallic object balls, said assembly for use with a billiard table having a main path through which each of said balls roll, the main path branching into a first path leading to an object ball compartment and a second path leading to a cue ball compartment comprising:

means disposed within the main path of the billiard table for sensing the presence of a ball rolling through the main path;

detecting means disposed within the main path of the billiard table a predetermined distance downstream from the sensing means for providing an output signal, the amplitude of which changes in response to said cue ball rolling therethrough;

means responsive to the sensing of a ball for energizing the detecting means;

means actuable in response to changes in the amplitude of the output signal from the detecting means for directing said cue ball into said second path.

14.     The cue ball detection and separation assembly of claim 13 wherein the energizing means powers the detecting means for a predetermined period of time sufficient for a ball to roll from the sensing means through the detecting means.

FIG. 1

FIG. 2

FIG. 3

0077605